(19) **Europäisches Patentamt / European Patent Office / Office européen des brevets**

(11) **EP 3 622 262 B1**

(12) **EUROPEAN PATENT SPECIFICATION**

(45) Date of publication and mention of the grant of the patent:
**15.10.2025 Bulletin 2025/42**

(21) Application number: **18732377.9**

(22) Date of filing: **27.06.2018**

(51) International Patent Classification (IPC):
**F16D 65/092** (2006.01)  **F16D 66/00** (2006.01)
**F16D 69/00** (2006.01)  **G01L 5/28** (2006.01)
**G01M 17/04** (2006.01)  **G01L 5/00** (2006.01)
**B60T 17/22** (2006.01)  **F16D 66/02** (2006.01)

(52) Cooperative Patent Classification (CPC):
**B60T 17/221; B60T 17/22; F16D 65/092;**
**F16D 66/021; F16D 69/00; G01L 5/0028;**
**G01L 5/28; G01M 17/04;** F16D 2066/005;
F16D 2066/006

(86) International application number:
**PCT/EP2018/067218**

(87) International publication number:
**WO 2019/002351 (03.01.2019 Gazette 2019/01)**

(54) **DEVICE FOR AUTOMATIC CALIBRATION OF A BRAKE PAD**

VORRICHTUNG ZUR AUTOMATISCHEN KALIBRIERUNG EINES BREMSBELAGES

DISPOSITIF D'ÉTALONNAGE AUTOMATIQUE D'UNE PLAQUETTE DE FREIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 IT 201700073192**
**28.09.2017 US 201715719320**
**28.09.2017 US 201715719304**

(43) Date of publication of application:
**18.03.2020 Bulletin 2020/12**

(60) Divisional application:
**22172443.8 / 4 060 306**

(73) Proprietor: **ITT Italia S.r.l.**
**20020 Lainate (IT)**

(72) Inventors:
• **SOLARI, Mattia**
**10062 Luserna San Giovanni (TO) (IT)**
• **SERRA, Stefano**
**10060 SanPietro Val Lemina (TO) (IT)**
• **TRUCCONE, Paolo**
**10067 Vigone (TO) (IT)**
• **MEDURI, Laura**
**18010 Cervo (Imperia) (IT)**

(74) Representative: **Rapisardi, Mariacristina**
**Ufficio Brevetti Rapisardi S.r.l.**
**Via Serbelloni, 12**
**20122 Milano (IT)**

(56) References cited:
**WO-A1-2014/170726     CN-U- 203 414 349**
**KR-B1- 100 856 721     US-B2- 7 398 669**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

As is well known, the customer-supplier relationship is based on the principle of the supply of a product of a defined quality, at a price commensurate with that quality.

In this regard, quality control techniques assume fundamental relevance from the supplier's viewpoint, as does the guarantee of product quality for the customer.

At present, therefore, quality management is aimed at the production of an extremely reduced number of defective parts.

Every production system is affected by errors.

In the case of quality control of brake pads for motor vehicles, this operation is normally carried out by withdrawing a sample pad, after a predefined number of pads produced, and then analysing it in a remote place.

If the pad is judged to be in conformity, i.e. free of defects, the entire product lot to which the sample pad belongs will likewise be judged to conform.

This type of control cannot be performed for a substantial number of pads, but only for a limited number of the same, and consequently cannot be applied on the pad production line.

Furthermore, quality control of a pad becomes impracticable with the current techniques if the pad is not of a traditional type, but it rather sensor-equipped, that is, fitted with a sensor capable of picking up information on the braking of a vehicle.

For example, in production lines for the manufacture of sensor-equipped pads, the main difference compared to a standard pad is the presence of a completely new manufacturing step called calibration.

The calibration process is a test applied at the end of the production line or during an intermediate phase thereof in order to evaluate the technical and functional characteristics of the sensor-equipped pad and it is also an actual calibration process designed to ensure that the sensor-equipped pads actually act as absolute sensors.

US 7398669 is a background document disclosing a testing apparatus for testing surface friction of a brake pad insulator material.

The task that the present invention sets itself is to provide a device for the automatic calibration of a brake pad that does not have the limitations of the prior art.

The task is achieved by an automatic calibration device for a sensor-equipped brake pad and a sensor-equipped brake pad comprising a friction material and a support plate or backplate, characterised in that said device comprises a fixed supporting base for stabilising the device during the operation thereof, at least one control panel for managing the device, a pad retaining means, a mechanical stress means generating on said pad a normal force in combination with a shear force or a normal force in combination with a torque and configured so as to reproduce the typical forces acting upon said pad during real braking of a vehicle, sensors for detecting said normal force and said shear force or sensors for detecting said normal force and said torque, said retaining means comprising a first lock-in means for locking in said friction material with said mechanical stress means and a second lock-in means for locking said pad on said fixed base.

Fig. 1 is a schematic side elevation view of the device according to the invention;

Fig. 2 is a schematic plan view of a backplate of a traditional pad and of a sensor-equipped pad to be calibrated with the device according to the invention;

Fig. 3 is a side elevation view of a variant embodiment of the device according to the invention;

Fig. 4 is a rear elevation view of a variant embodiment of the device, wherein the mechanical stress means is defined by an endless screw according to the invention;

Fig. 5 is a side elevation view of the variant embodiment of fig. 4 of the device according to the invention;

Fig. 6 is a detailed side elevation view of the variant embodiment of the device according to the invention;

Fig. 6a shows an exemplification of a contacting device;

Fig. 7 is a perspective view of the second element of the variant embodiment of the device according to the invention;

Fig. 8 is a schematic side elevation view of the threaded bars of the device according to the invention;

Fig. 9 is a schematic front elevation view of the threaded bars of the device according to the invention;

Fig. 10 shows the complete layout with the cage enclosing the machine for safety reasons and the display screen and the double folding door used to close the cage during operation;

Fig. 11 shows a further embodiment of the invention.

With particular reference to the above-described figures, the device for automatic calibration, denoted in its entirety by the reference number 1, comprises a supporting base 2 for stabilising the device during its operation.

The base 2 is preferably metallic and provides stability and support to the entire device during calibration and compression of the pads, relative to the braking device of a vehicle, due to the high level of pressures and forces applied.

Hereinafter pad will mean a pad equipped with a sensor 80 of the type comprising a metal support element, a block of friction material supported by the metal support element, and one or more sensors supported by the metal support element and interposed between the block of friction material and the metal support element.

The sensors are capable of detecting, during use on a vehicle, the forces that are exchanged during use between the block of friction material and the element to be braked, defined by the disc constrained to the wheel.

A sensor-equipped pad results in the possibility of detecting and/or foreseeing the generation of numerous problems, such as anomalous wear on the brake pads, for example because they "touch" the disc even when the brake is not activated, for example due to a poor adjustment of the brake callipers, rather than undesirable noise, vibrations and squealing during braking.

The automatic calibration device 1 comprises at least one control panel 6, a pad retaining means, a mechanical stress means generating on the pad a normal force in combination with a shear force or a normal force in combination with a torque and configured so as to reproduce the typical forces acting upon said pad during real braking of a vehicle, and sensors for detecting the normal force and the shear force or sensors for detecting the normal force and the torque.

On the device 1 there is a control panel 6 for the management thereof, which comprises all the push buttons for blocking the calibration test for emergency reasons during the calibration operations.

The panel must further have service push buttons for starting and selecting the calibration tests to be performed and a screen 5 for displaying information related to the test underway, for example, information relative to the pressure and/or forces and/or torques applied.

The panel 6 must also be able to provide calibration test reports stating the values measured by the device and relating to a type of pad during the calibration procedures, as well as the statistical values thereof, such as mean maximum, minimum and standard deviations and, finally, the calibration parameters and an indication as to whether the test has been passed or not according to the initial predefined values of the parameters.

The panel 6 must take into consideration the control of the ECU in order to measure the pads and synchronise them with the measurements of the sensors installed in the device 1 and used as a reference for comparison with those of the pad.

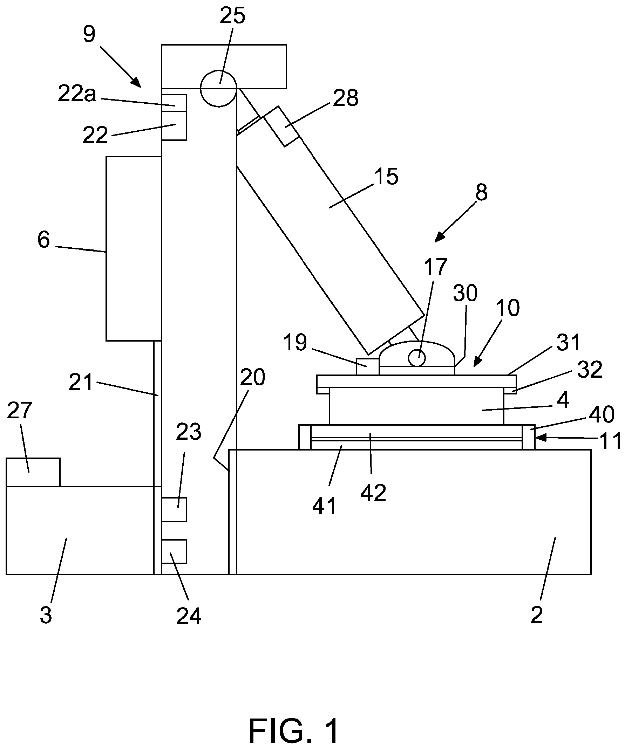

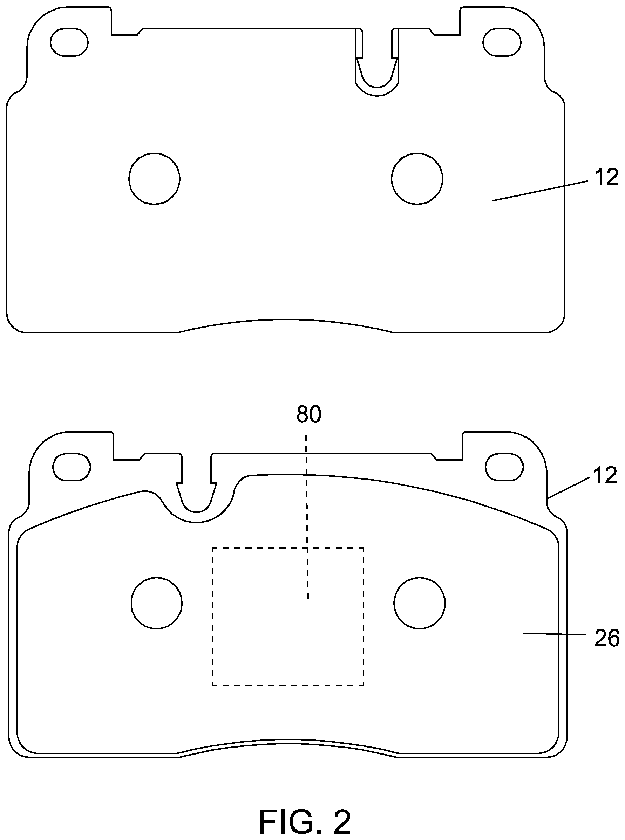

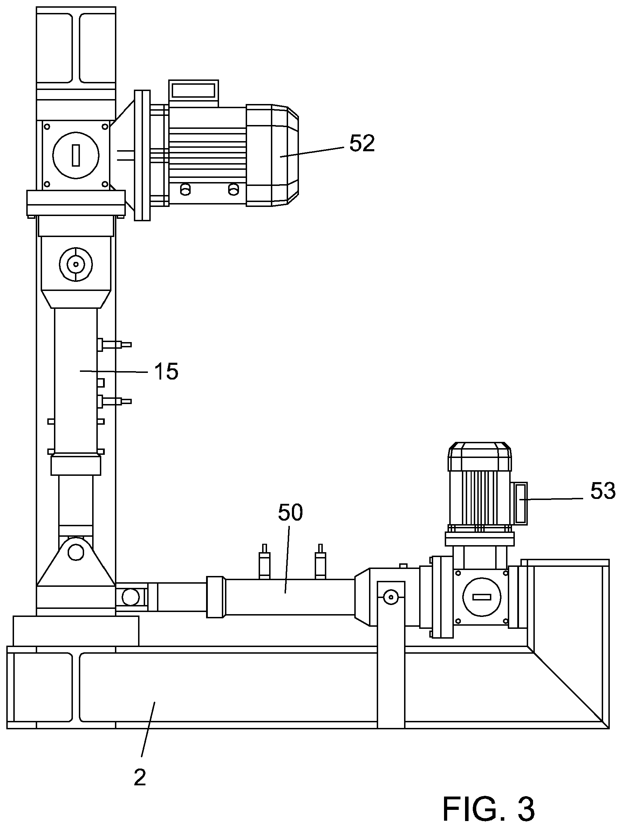

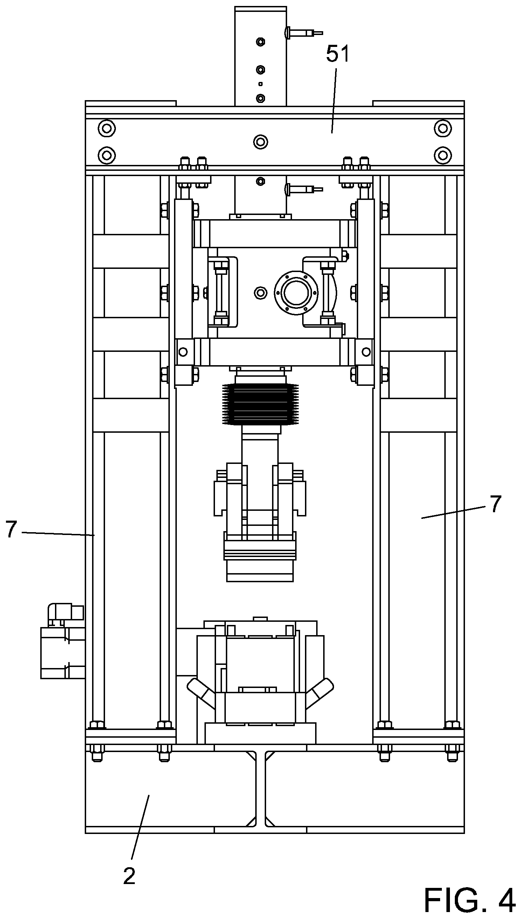

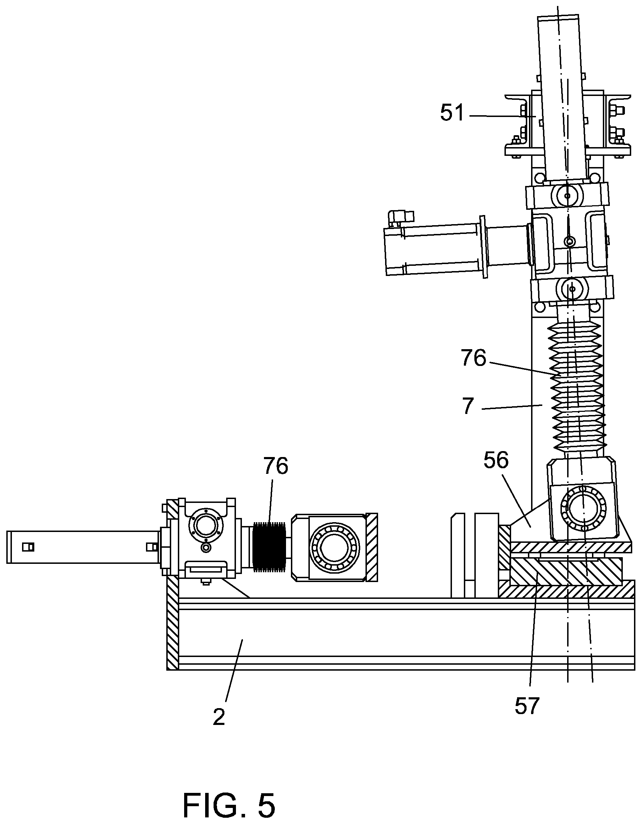

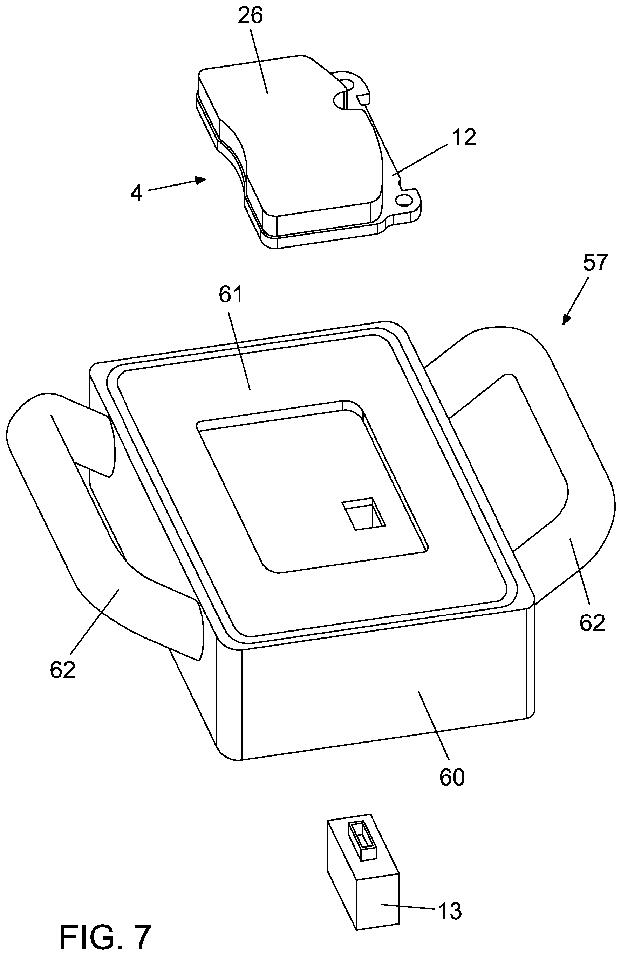

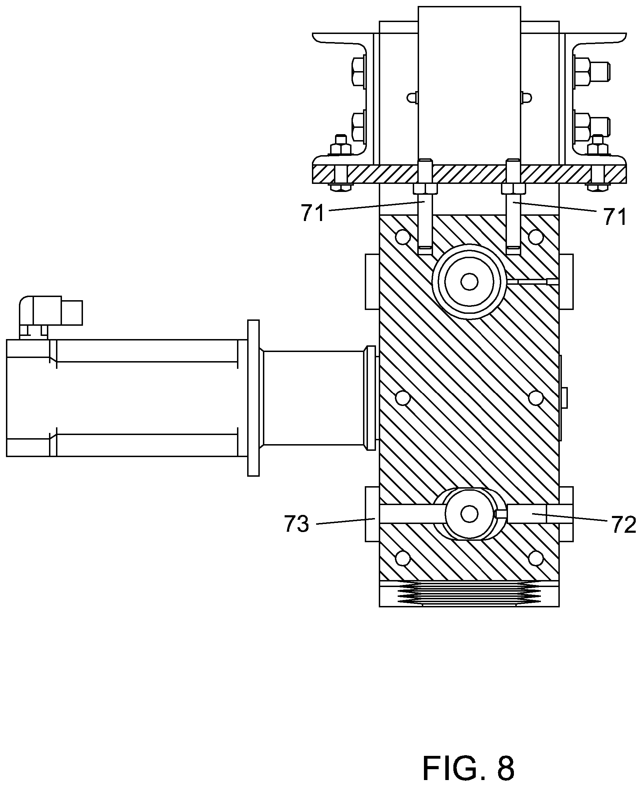

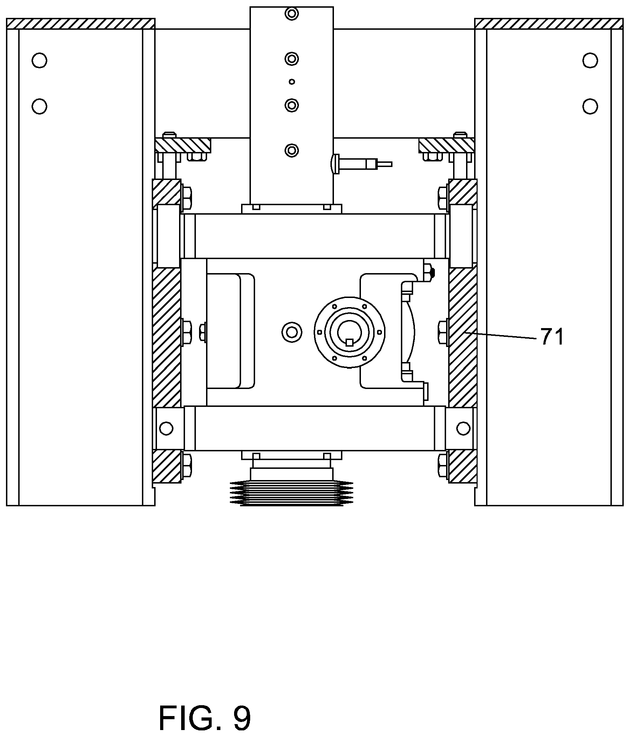

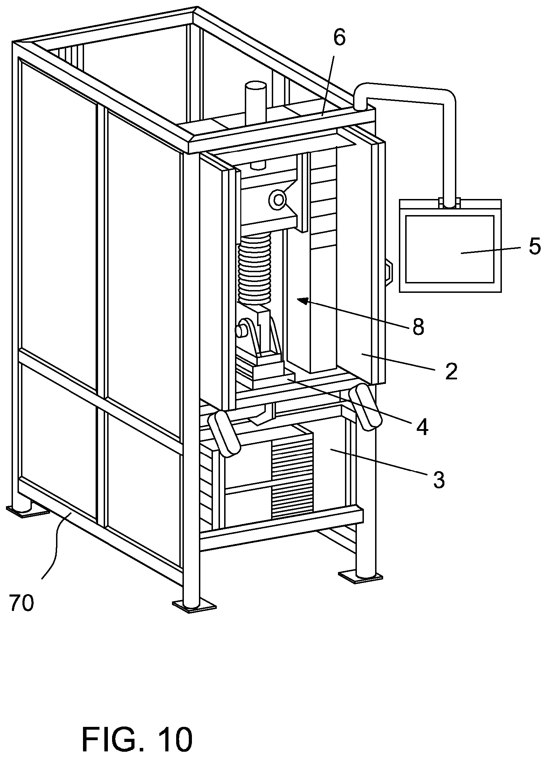

We shall now make reference to the embodiments illustrated in figures 1 - 10.

In a first technical solution, the device 1 comprises at least one fluid-dynamic compressor 3 for generating pressure ramps and exerting an optimal pressure on a pad 4 to be calibrated, operating at a pressure comprised between approximately 5 and 150 bar.

The device 1 also has at least one supporting column 7 associated with the supporting base 2 and suitable for mechanically supporting at least the mechanical stress means, which in this case is a pressure means, generically indicated by 8, for generating a pre-established pressure on the pad 4 and defined, in said first technical solution, by a first fluid-dynamic piston 15 suitable for delivering the necessary pressure to the pad 4 so as to obtain a shear force beyond a normal force as in real braking in a brake calliper of a vehicle.

As will be seen further below, in a second preferred technical solution, the pressure means 8 is defined by the first piston 15 and by a second piston 50.

There is also an adjustment means, generically indicated by 9, for adjusting the pressure means 8 so as to exert on the pad 4 a shear force, in addition to a normal force.

The pad retaining means 4 comprises a first lock-in means 10 for locking in the friction material 26 of the pad 4 with the pressure means 8 and a second lock-in means 11 for locking in the pad 4, again on the base 2, for the purpose of reproducing the typical forces that act on the pad during the braking of a vehicle.

The first lock-in means 10 comprises a first profiled edge 32 which reproduces the conformation of the friction material 26 of the pad 4 so as to lock it in optimally during the pressure exerted thereupon by the pressure means 8 in order to enable the transmission of the shear forces during the calibration of the pad in as uniform a manner as possible.

The second lock-in means 11 comprises a second profiled edge 40 which reproduces the conformation of the metal plate 12 or backplate of the pad 4 so as to lock it in during the pressure exerted thereupon in order to enable the transmission of shear forces during the calibration of the pad while avoiding the shifting thereof relative to the base 2.

The metal plate 12 or backplate of the pad conveniently has pins 13a for maintaining electrical contact of the pad 4 with the calibration device 1, for example via a connector 13, by means of a contact device that can be manually or automatically actuated and must have a lever to enable contact to be made between the pins and connector in a very precise manner when the pad is positioned in the calibration device at the start of the calibration test.

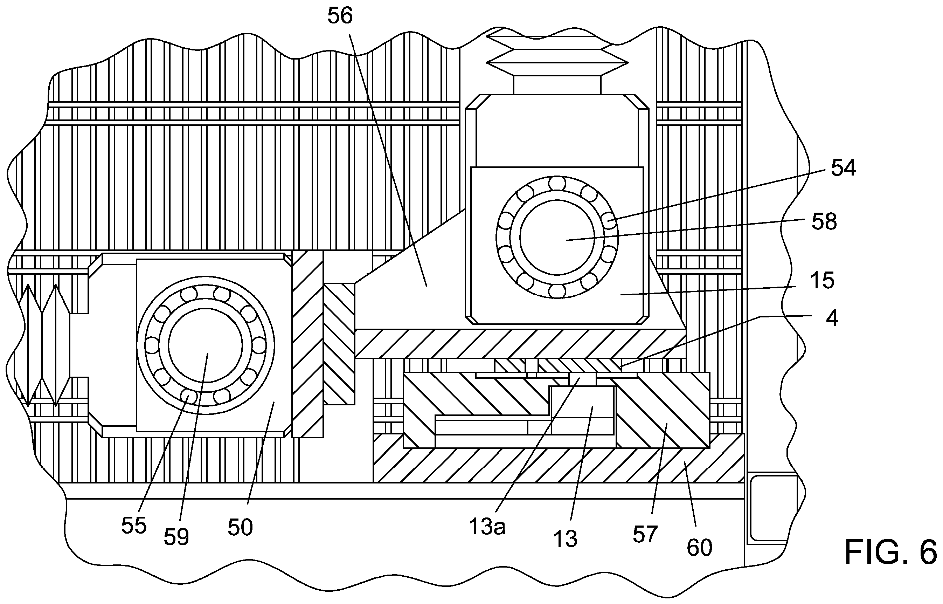

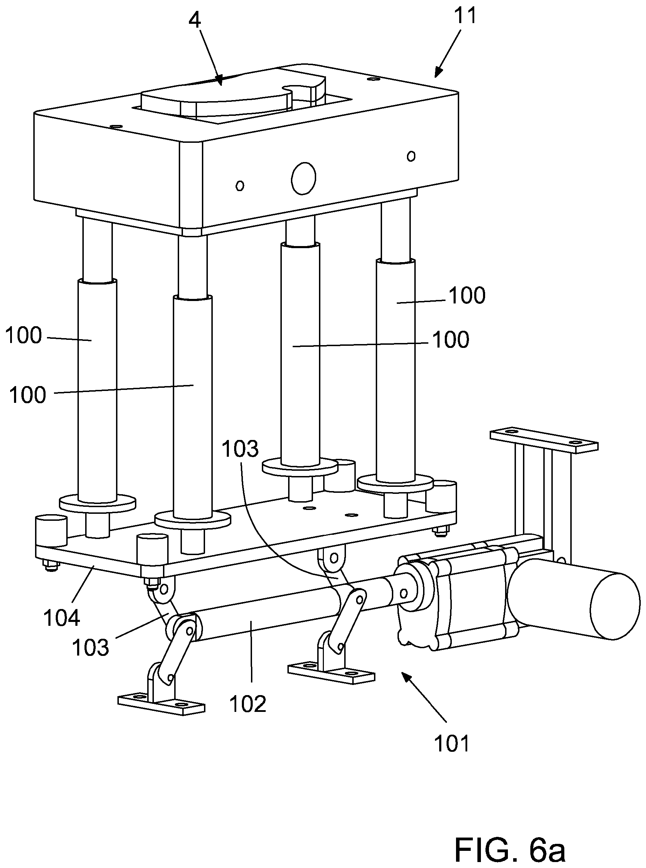

Figure 6a shows a contact device comprising, by way of example, a mechanism with shock absorbers 100 which enable the contacts of the connector 13 to be retracted if the positioning of the same is not optimal, in order not to damage the same by bending them during incorrect contacting, as well as a mechanised system 101 for automatic contacting which comprises, solely by way of example, a specially motorised translating shaft 102 connected by means of a system of connecting rods 103 to a plate 104 for supporting the mechanism with shock absorbers 100.

As noted, the device 1 further comprises pressure sensors 23 and force sensors 24 for measuring the normal forces and shear forces; they are positioned in such a way as to maximise the reliability of their measurements relative to the values actually detected and transmitted to the pad 4 via the pressure means 8.

More specifically, in the first technical solution the pressure means 8 comprises at least a first fluid-dynamic piston 15, which is advantageously supported by at least one supporting column 7 and can be inclined via the adjustment means 9.

The column 7 also provides mechanical support to the first piston and the compressor 3 for the fluid-dynamic system, which can use oil or air.

Furthermore, in this solution the adjustment means 9 is defined by the column 7 itself, which is used to modify the angle of incidence of the first piston in a range of 50° to 80° with an optimal value of 68.2 degrees (the optimal value obviously depends on the nominal friction coefficient of the brake pad).

In order to modify this angle, the column 7 must be capable of being inclined backward or moved upward relative to the base 2.

Once the first piston has been correctly positioned with a desired angle, the device 1 has a locking device, not illustrated, for fixing this angle permanently in total safety during the ensuing calibration test.

The device also has a mechanism for lifting the first piston 15 before and after the calibration of said pad for the removal of a calibrated pad with a pad to be calibrated.

In particular the lifting mechanism can be obtained, for example, by means of at least one guide 20 for the longitudinal movement of the column 7.

The guide 20 must be provided with nuts or other locking systems for permanently fixing the chosen angle.

It should also be specified that the first lock-in means 10 comprises a level of the pin 17 of the first piston 15, a device 19 for enabling a precise reading, during the calibration, of the angle formed between the axis of the first piston and the plane of the base 2, on which the pad 4 is positioned, in such a way as to have good control over said parameter, which is fundamental for a positive outcome of the calibration.

In a variant embodiment, the pressure means 8 can comprise an electric motor which activates an endless screw, not illustrated, located on the first piston in order to effect the movement thereof. It is further specified that the base 2 must have a mass and a shape such as to assure high mechanical strength in order to avoid any shifting or fall of the entire device 1 during the applications of pressure.

Furthermore, the base 2 must not be subject to deformations.

The upper part of the base 2 must further have threaded holes for mounting and removing the second lock-in means 11, which must be changed on each occasion to provide the flexibility of use necessary when the size of the pads 4 changes.

All of the mechanical components must be selected so as to ensure structural and mechanical stability and prevent wear after intensive calibration cycles.

This can be obtained through the structural dimensioning of the components of the device 1 and choosing resistant stainless steel materials with a high level of mechanical strength.

The base 2 must also have supporting uprights 21 to adequately support the column 7.

As seen, the column 7 is connected to the guide 20 to enable the longitudinal movement thereof relative to the base 2, so that disposed inside the latter there are all the data transmission cables and the power supply cable, as well as all the tubes for the oil or compressed gas serving to provide the required thrust to the first piston.

Furthermore, the column 7 must be dimensioned in such a way as not to undergo deformations that could either modify the way in which the forces are transmitted or even disable the entire device, for example by precluding the correct setting of the angle of incidence and the loading and unloading of the pads 4 during the calibration process.

The pressure sensor 23 is positioned in the column 7 to permit the measurement of the fluid-dynamic pressure of the fluid-dynamic or gas circuit suitable for cooperating with a safety valve 22.

In the device there are also valves 22a for loading and unloading the oil or gas from the fluid-dynamic system.

Advantageously, as seen, the first piston 15 exerts a pressure on the pad 4, and is connected to the column 7 by means of a connection hub 25 and connected to the fluid-dynamic circuit.

The first piston must have a length such as to end at the first lock-in means 10 so as to be easily mountable and removable, but simultaneously robust and reliable in order to ensure a correct positioning relative to the pad 4 and to enable a pressure as uniform as possible on the latter and an optimal transmission of the shear forces on the friction material 26 of the pad 4.

Before any calibration cycle, the first piston 15 must be capable of being moved laterally or vertically to ensure facilitated access to the pads 4 so that they can be positioned or removed from the device 1.

An automatic device 27 can also be provided to set the pressure of the oil or gas to zero to enable the positioning of the pad 4 in the second lock-in means in a correct position before the start of the calibration procedure and restore the pressure of the oil or gas after the correct positioning of a new pad 4 to be calibrated.

The pressure of the fluid-dynamic circuit which supplies pressure to the first piston 15 must be checked and measured during the calibration of the pad by a dedicated sensor 28 connected to the fluid-dynamic circuit.

The force actually transmitted to the piston, and consequently to the pad 4, is measured with precision both in the normal direction and tangentially to the surface of the pad 4 by means of load cells 29 positioned conveniently, for example, on the pin 17 or in the hinge 25 of the first piston 15 or also on the base 2 or in any other equivalent position for such measurements.

All of the sensors must be connected to the control panel 6 to enable a constant, continuous measurement of the forces during calibration.

The fluid-dynamic pressure of the oil that pushes the first piston must have values comprised between 5 bar and 160 bar, and enable a precision of at least 5% for reduced pressure values <25 bar and 2-3% for values above 25 bar.

In detail, the first lock-in means 10 for locking in the friction material 26 must be capable of being slightly inclined so as to be adapted to the surface profile of the pad 4 and this is achieved by means of the pin 17 in the first technical solution or, as we shall see, by means of a first and a second bearing 54 and 55 in a preferred technical solution.

The first lock-in means 10 has a coupling mechanism 30 for locking or releasing it relative to the first piston 15 in such a way that it can be changed according to the conformation of the pad to be calibrated or in the event of damage or wear.

The first lock-in means is defined by a first template 31, which must have a shape and an edge 32 such as to precisely reproduce the profile of the friction material 26 of the pad 4.

The height of the edge 32 must be about 2 mm depending on the pad shape and model.

In order to prevent damage to the friction material 26, it will be advantageous to slightly round the margin of the edge 32 and possibly use soft material to reduce the mechanical stress on the corresponding edge of the friction material of the pad.

In a different embodiment, the first template 31 can be integrated into the first piston without having, in this case, the edge 32.

In such a case it would be desirable to use stainless steel or a material similar to the one used in the vehicle brake disc so as to have the same friction coefficients on the friction material 26 during the calibration of the pad.

The second lock-in means 11 of the pad 4 acts on the backplate 12 thereof and comprises a housing plate 40, which can be made of stainless steel, connected directly to the base 2 by screws and bolts suitable for the securing thereof in such a way as to ensure long-term operating stability despite the enormous forces acting on it.

The housing plate 40 has a second template 41 having an edge 42 that exactly reproduces the profile of the backplate or metal plate 12 of the pad 4.

The housing plate 40 also has a connection system having the above-described pins 13a to permit an electrical connection to the pad 4 during the calibration thereof and send the signals required by the electronic system for the acquisition of the necessary data during the calibration procedure.

The pins 13a must be removably associated in the housing plate 40 and be positioned in a manner that is compatible with the position of the connector 13 of the pad 4, which can vary on each occasion depending on the specific model of the pad to be calibrated.

At the outlet of the housing plate 40 of the backplate of the pad 4 there is a cable for transmitting the signal, not illustrated, having a number of wires necessary to receive the signals of all the sensors integrated into the brake pad, said wires being of a standard length, typically (but not necessarily) less than 1 metre and incorporated in a cable compatible with the pin 13a of the electronic control unit (ECU), which is built specifically to measure and receive the signals of the pad.

In a preferred variant embodiment, the pressure means 8 comprises, as said, both the first piston 15, which is used, however, in order to be able to apply only a normal force on the pad 4, and at least a second piston 50 for applying thereupon a normal force or shear force.

Advantageously, the first and second pistons 15 and 50 are disposed perpendicularly to each other on the base 2.

In this solution the base 2 supports two main columns 7, which maintain fixed a third crossbar 51, which has the function of supporting the first piston 15 in a vertical position so as to provide vertical pressure to the pad 4.

The crossbar 51 is not inclinable, but rather fixed, as the shear forces are provided by the second piston 50, parallel to the plane of the base 2, and, consequently, to the surface of the friction material 26.

In particular, the second piston 50 is disposed so as to directly deliver the forces to the surface of the pad 4 on one side thereof, and in particular laterally to the friction material 26.

The first and second pistons 15 and 50 are driven, respectively, by a first and a second electric motor 52 and 53.

The first and second electric motors will provide the energy necessary to supply suitable forces to be applied on the pad 4 via the first and second pistons.

This preferred technical solution assures several advantages compared to the previous one.

Firstly, the two normal and horizontal forces can be exerted separately, making it possible to perform solely a compressibility test on the pad, which in this case can also not be of the sensor-equipped type, but rather be a traditional braking pad devoid of sensors capable of transmitting the values of the forces that are applied thereon.

In this manner, one can apply a compression force alone on the pad, with a direction normal to the surface thereof, without applying shear forces, and measure the variation in thickness as a function of the pressure applied on the pad.

This possibility is very important because it provides a parameter that is extremely important for characterising the production and process of manufacture both of sensor-equipped pads and traditional pads and enables virtually 100% control of production.

The second advantage is an increase in flexibility for delivering different shear forces at a given pressure, it being understood that the optimal condition defined by the formula $\mu = \dfrac{F_t}{F_N} = tan\,\vartheta$ can always

be restored by setting the ratio between the two normal and horizontal forces applied on the pad, which in this case is sensor-equipped.

In particular, the first and second pistons apply the vertical force and the horizontal force on a first element that acts directly on the pad held fixed by a second element which houses both the pad and the pins 13a to permit an electrical connection between the pad and the external electronic circuit for receiving the signals of the pad.

The first take-up element 56 for taking up the force from the first piston 15 and from the second piston 50 has a flat clamping surface on the exposed surface of the friction material of the pad 4.

The first and second pistons 15 and 50 have, in proximity to the base 2, a first and a second bearing 54 and 55 to provide a minimum tilting capability to the first and second elements 56 and 57 to eliminate the friction forces between them and the first and second pistons and maintain solely the contribution of the friction force between the pad and the steel plate, in order to give a real representation of the process of rubbing between the disc and pad in the brake calliper.

The first and second bearings 54 and 55 have load cells 58 and 59 inside them which are capable of communicating data related to the pressure exerted on the pad.

In this manner, advantageously, on the surface of the pad 4, in particular on the side of the friction material 26, stability is obtained thanks to the friction forces that arise between the pad and the first element 56.

In such a case, in order to avoid mechanical failures, the condition $\frac{F_t}{F_N} < \mu_s$ must be satisfied, where $\mu_s$ is the static friction coefficient.

On the side of the backplate 12, the second element 57 will be used; it has a base 60 having a recess 61 for reproducing the profile of the backplate 12, which has a thickness ranging from 4 to 6 mm and shapes varying according to the pad model.

The recess 61 has a thickness of at least 3-4 mm to enable a lateral hold on the pad 4 during the calibration operation and limit all lateral movements thereof.

The second element 57 further has a connector 13 for electrically connecting the pad, which, as said, is sensor-equipped in this case, with the electrical part of the device 1.

The second element 57 also has two handles 62 to permit a simplified removal thereof following pad changes or simply because of wear.

The second element will be maintained fixed to the base 2 by mechanical attachment points suited to the purpose and not illustrated.

In this case as well, the pressure means can have an endless screw 76 suitable for exerting pressure on the pad.

It should also be specified that, in the preferred variant embodiment, the first piston has threaded bars 71 for adjusting its distance from the base 2 and a spring-operated presser 72 for maintaining the end thereof that acts on the pad perfectly parallel to the surface of the same.

The verticality of the spring-operated presser is suitably adjusted by means of an alignment cam 73.

In light of the foregoing, it is very important for the control panel 6 to be able to correctly run the calibration procedure according to the calibration protocol defined at the time of setting the calibration procedure itself.

In particular, the control panel is capable of ensuring the safety of the operators and technicians who perform the calibration by blocking any calibration run if the overall hardware or software controls are not positive, of managing the start and stop of the calibration, of permitting and managing the loading and unloading of the hydraulic or electrical systems and maintenance operations in general, of managing the loading and removal of the pads to be calibrated in the calibration system, of controlling and maintaining the level of forces and pressure according to the procedure and test protocols, of memorising the data of the sensors during the calibration procedure and the data on a central or locale database, of sending and receiving the data or calibration settings of the calibration system, of managing the step of printing on the brake pad after the calibration in order to print a permanent Data Matrix and memorise, accordingly, the values received to permit the traceability of the structural and functional characteristics of the pad.

Control of the calibration of the pad must be performed, insofar as the pressure is concerned, on the fluid-dynamic circuit or by means of the electric motor driving the piston, and insofar as the applied forces are concerned, by using the normal force measured by the load cells.

The number of pressure values detected during the calibration will preferably be a minimum of 4 and a maximum of 10.

The pressure values must preferably correspond to any of the following values expressed in bars:

$$P_i = 5 + (i - 1) * 145 / (N - 1)$$

Where i is an index of the specific point of measurement and N is the total selected number of points to be measured during the calibration.

In this case a constant specific interval of between 5 and 150 bar is assumed.

The control panel must have power inputs, preferably 110/220 VAC, in order to power the entire device 1.

The electrical insulation and earthing must be suitably set so as to avoid leakage currents and EMC emissions or problems of immunity and electrostatic discharges (ESD).

In particular, any leakage of current toward the base or toward the pads must be avoided in order to eliminate any disturbance in the measurement of data during the calibration.

The control panel must also have the possibility of interfacing with an external unit such as a PC to be configured to enable the downloading either of the calibration data or DataMatrix of the pad and it must also control a trigger preferably of the -10, 10 V type to manage the calibration steps and coordinate the various electronic components for acquiring the data of the pad sensors.

During a calibration session, each value of pressure used to compress the pad must be maintained stable for a period of time, typically comprised between 1s and 10s, which should be configured by the software in the control panel during the calibration setting phase.

Finally, the panel should also have indicators, such as LEDs, to enable real-time readings and monitoring of the values observed via the pressure and force sensors installed in the device 1.

This makes it always possible for the control and alarms to be activated in the event of an anomaly relative to the predetermined values fixed during the setting phase.

Thanks to the device 1 of the invention, the calibration procedure substantially corresponds to the real conditions in terms of pressure and shear forces, and to those of the brake calliper during braking of a vehicle.

In particular, the ratio between the normal forces, correlated to the pressure, and the shear forces, correlated to the friction forces, must be as close as possible to the real coefficient of friction between the brake pad and disc of the vehicle.

The operation of the device 1 according to the invention is as follows.

The value of the friction coefficient is known from the design stage and is adjusted at the start of the calibration procedure.

The angle of incidence of the piston is adjusted and the angle of inclination thereof is changed until reaching the desired value according to the following formula:

$$\mu = \frac{F_t}{F_N} = tan\,\vartheta$$

Where $F_t$ is the tangential force, $F_N$ the normal force, and $\theta$ the angle between the axis of the piston and the plane of the surface of the friction material of the brake pad.

This formula is very important because it takes account of the non-linear behaviour of the friction material under pressure, thanks to the fact that the elastic constants thereof depend on the pressure.

Consequently, failure to reach a condition close to the friction coefficient, in terms of the ratio of forces, will cause an incorrect calibration of the pad, since the forces will be transmitted in a different manner from the real braking conditions of the vehicle.

In a normal calibration of a pad 4, after the calibration parameters have been set by means of suitable software, which is not the subject matter of the present invention, the device 1 will be set in a pad loading/unloading mode to facilitate the movement of the first piston 15 and enable correct positioning of the pad in the second lock-in means 11.

The first piston is repositioned with the first lock-in means 10 for locking in the friction material 26 in such a way that the edge 32 thereof adheres perfectly to the edge of the friction material.

Then the device 1 is set back into the calibration mode by restoring pressure to the fluid-dynamic circuit so as to lock the first piston in the pre-established position.

The safety cage 70 is closed again so that calibration of the pad can begin.

The test is performed automatically and in sequence according to the number of points established and defined via the software.

In the absence of such a definition, the calibration will be performed according to the default setting, that is, by carrying out 4 measurements at 5, 53.3, 101.6 and 150 bar, maintained for 4 seconds with 5 second intervals of pressure increases to the next value and stabilisation thereof.

At the end of calibration, according to what was previously specified, the device 1 automatically comes to a stop and saves all the data in a predefined file via configuration software.

During the calibration of the pad the values of the sensors must be visible in real time also from the control panel 5 via dedicated LED indicators.

At the end of calibration, the operator must set the machine in the brake pad unloading mode, open the safety cage 70 by releasing the lock mechanism of block and move the first piston to access the pad and remove it.

The whole procedure will be repeated to calibrate a new pad.

In case of the device with a first and second piston disposed perpendicular to each other, the operation is the same as that of the device having only the first piston, since only the method of applying the forces changes, while the result does not change.

Another important additional feature of the machine is that of enabling an in-line measurement of compressibility in 100% of the pads produced, thus assuring high standards of quality. This is possible thanks to the inclusion of an additional module, preferably applied to the piston 15 in figure 6, consisting of a system for measuring the distance between two fixed points, one on the pusher and one on the base on which the pad to be calibrated rests. This measurement can be conveniently performed by means of laser measurement systems, which in any case assure precisions within about one micron. In this manner, if, for example, only a normal force is exerted, it will be possible to simultaneously measure both the pressure exerted and the consequent compression of the friction material and/or underlayer of the brake pad, which provide the values of compressibility of the pad itself.

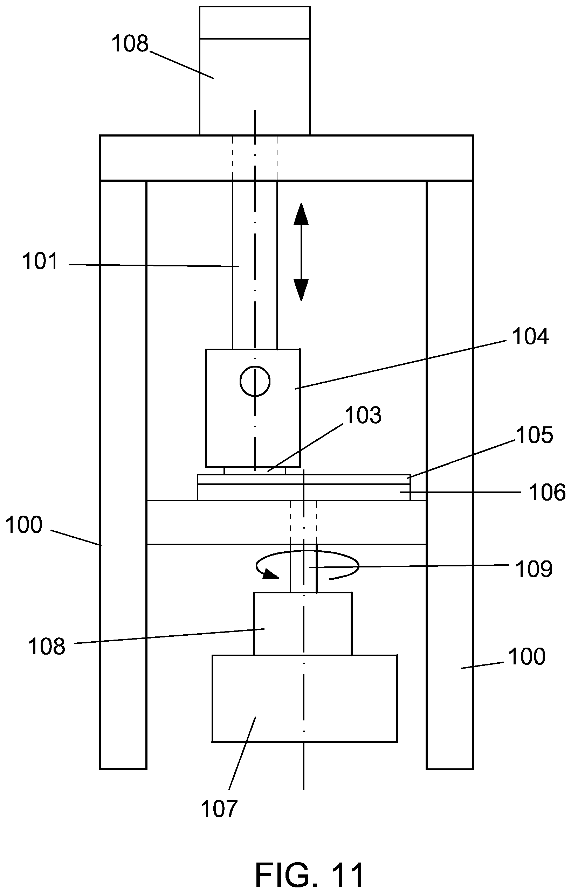

We shall make reference, finally, to the embodiment of the invention illustrated in figure 11.

In the previous cases, the forces required on the pad in order to reproduce the same vertical or pressure loads and the same shear loads experienced by the braking device are generated by a single piston or by two pistons.

In this case the stress means comprises a motorised disk 105 which applies torque to the pad 103 and a vertical piston 101 which applies the normal force to the pad 103.

The pad retaining means 10 comprises a terminal pressing plate 104 of the vertical piston 101. The pressing plate 104 supports the pad 103 and presses it against the disk 105.

More precisely, the supporting base for stabilising the device during the operation thereof comprises a structure with uprights 100 which supports the vertical piston 101.

The vertical piston 101 is driven by a motor 102, preferably an electric motor, in order to provide the normal force which the piston 101 exerts on the pad 103.

The pressing plate 104 has a bearing for micrometric adjustment in the event of imperfect planarity, so as to provide a pressure as uniform as possible.

The piston 101 presses the pad against the disk 105, as occurs in the real world.

The disk 105 can be an actual brake disk used in a vehicle equipped with the same braking device and the same brake pad undergoing calibration, or else it can be a disk made with the same material as a brake disk.

A tool 106 is used to install disks 105, which may also differ in terms of size and material, on the calibration device.

The disk 105 and the position of the pad 103 must be selected in a manner that is suitable for simulating the same condition as in the braking device of the vehicle with the same radius provided for in the braking device of the vehicle.

The tool 106 is then integrated into the calibration device to support the disk 105 and enable the delivery of torsion force to the pad 103 so as to simulate the braking torque experienced by the pad during a braking of the braking device.

Because of the intense vertical forces due to the high pressure intervals required to replicate the conditions experienced by the braking device (1 - 180 Bar), the tool 106 is mechanically robust and allows very small torsional movements at the pad 103 about the axis of the disk 105, as actually occurs in a vehicle.

To enable these movements, there is provided a bearing fixed rigidly onto the base of the calibration device so as to guarantee mechanical robustness and at the same time the rotational movement about the axis of the disk 105.

In this case as well, the calibration device also comprises a motor 107 for rotating the tool 106 and the disk 105 fixedly supported by it, and a coupling 108, for example a differential coupling, for connecting the motor 107 to the shaft 109 that supports the tool 106 in rotation.

With the differential coupling 108, torque values in the order of 6000-10000 Nm are achieved without any need to use motors that are particularly large or powerful.

The mechanical stability of the system is guaranteed by the following condition:

$$\frac{F_t}{F_N} < \mu$$

Where $\mu$ is the nominal static friction coefficient of the specific pad 103.

The aforesaid condition is necessary to avoid rotational movement and maintain a static measurement.

In this case, $F_N$ represents the vertical forces, whilst $F_t$ derives from the braking torque $\tau = RF_t$, with R representing the actual radius of the braking device, which will be the same as used in the dynamometric measurements for that braking device.

The measurement should preferably be made not far from the aforesaid condition in order to reproduce the conditions experienced by the braking device.

A specific control of the torque value is provided for to maintain the aforesaid condition while the pressure increases during the test.

The particularity of this embodiment of the invention consists in the fact that a real torque is provided by the motor 107 so as to subject the pad to a torsional movement and produce a deformation by shear forces on the friction material precisely as occurs in the braking device.

Therefore, the main difference is the provision of a real torque instead of shear forces to produce essentially the same effect as in the solutions previously illustrated and described.

In this case, therefore, the torque is directly controlled instead of the shear forces.

Finally, in this specific case a torque sensor (not shown) must be provided for direct measurement of the torque delivered to the pad.

This torque sensor must be positioned along the drive shaft 109, preferably near the coupling 18 or the tool 106 where the disk 105 is housed.

Moreover, a position sensor (not shown), for example of the laser type, may be positioned on the pressing plate 104 to measure the variation in distance between the sensor and the disk 105 when the pad 103 is compressed so as to enable compressibility measurements as well.

**Claims**

1. A combination of a sensor-equipped brake pad (4) and a device (1) for automatic calibration of said sensor-equipped brake pad (4), said sensor-equipped brake pad comprising a friction material (26) and a metal plate or backplate (12), said device (1) comprising a fixed supporting base (2) for stabilising said device (1) during the operation thereof, at least one control panel (6) for managing said device (1), a retaining means for said pad (4), a mechanical stress means generating on said pad (4) a normal force in combination with a shear force and configured so as to reproduce the typical forces acting upon said pad (4) during real braking of a vehicle, sensors for detecting said normal force and said shear force, said retaining means comprising a first lock-in means (10) for locking in the friction material with said mechanical stress means, said first lock-in means (10) comprising at least a first profiled edge (32), which reproduces the conformation of said friction material (26) of said pad (4) so as to lock in said friction material during the stresses exerted thereupon by said mechanical stress means in order to enable the transmission of shear forces during the calibration in as uniform a manner as possible, said device (1) **characterized in that** it comprises a second lock-in means (11) for locking said pad onto said fixed base (2), said second lock-in means (11) comprising a second profiled edge (40) which reproduces the conformation of said metal plate or backplate (12) of said pad so as to lock it in during the stresses exerted thereupon by said stress means in order to enable the transmission of shear forces during the calibration while avoiding the shifting of said pad on said fixed supporting base (2).

2. The combination of brake pad (4) and device (1) according to claim 1, **characterised in that** said stress means is a pressure means, comprising either a first fluid-dynamic piston (15) or a first and a second fluid-dynamic pistons (15, 50).

3. The combination of brake pad (4) and device (1) according to claim 2, **characterised in that** said device (1) comprises at least one supporting column (7) associated with said supporting base (2) and suitable for mechanically supporting said first fluid-dynamic piston (15), and an adjustment means (9) for adjusting said first fluid-dynamic piston (15) to exert on the pad (4) a shear force, in addition to a normal force.

4. The combination of brake pad (4) and device (1) according to one or more of the preceding claims, **characterised in that** said device (1) comprises a lifting mechanism (20) for lifting said stress means before and after the calibration of said pad (4) for the removal of a calibrated pad with a pad to be calibrated.

5. The combination of brake pad (4) and device (1) according to one or more of the preceding claims, **characterised in that** said metal plate (12) has pins (13a) for maintaining electrical contact of said pad (4) with said device (1) via a connector (13).

6. The combination of brake pad (4) and device (1) according to the preceding claim, **characterised in that** said device (1) has a mechanism for retracting the contacts of said connector (13) in order to avoid damage to the same and maintain electrical contact of said pad (4) with said device (1), and a mechanised automatic contacting system (101).

7. The combination of brake pad (4) and device (1) according to claim 3, **characterised in that** said adjustment means (9) modifies the angle of incidence of said first piston (15) by shifting said column (7) relative to said base (2).

8. The combination of brake pad (4) and device (1) according to claim 7, **characterised in that** said device (1) comprises a locking lever for fixing said angle of incidence during the operation of said device.

9. The combination of brake pad (4) and device (1) according to one or more of claims 2 to 8, **characterised in that** said stress means comprises an electric motor which activates an endless screw on an arm of said first piston (15).

10. The combination of brake pad (4) and device (1) according to one or more of claims 2 to 9, **characterised in that** said first piston (15) is configured to apply said normal force and said second piston (50) is configured to apply said shear force, said first and second pistons (15 and 50) being disposed perpendicularly to each other on said base (2).

11. The combination of brake pad (4) and device (1) according to the previous claim, **characterised in that** said first and second pistons (15 and 50) are driven by a first and a second electric motor (52 and 53), respectively.

12. The combination of brake pad (4) and device (1), according to one or more of claims 10 and 11, **characterised in that** said device (1) comprises a first element (56) for taking up a vertical force and respectively a horizontal force from said first piston (15) and respectively from said second piston (50), said first element (56) having a flat clamping surface on the exposed surface of the friction material of the pad (4)..

13. The combination of brake pad (4) and device (1) according to claims 5 and 9, **characterised in that** said device (1) comprises a second element (57) in which said pad (4) is fixed and in which said pins (13a) are housed.

14. The combination of brake pad (4) and device (1) according to any claim 10 to 13, **characterised in that** said first and second piston (15 and 50) have, in proximity to said base (2), a first and a second bearing (54 and 55).

15. The combination of brake pad (4) and device (1) according to one or more of the preceding claims, **characterised in that** said first lock-in means (10) is defined by a first template (31), which must have a shape and an edge (32) such as to precisely reproduce the profile of the friction material (26) of the pad (4).

16. The combination of brake pad (4) and device (1) according to one or more of the preceding claims, **characterised in that** said second lock-in means (11) of the pad (4) acts on the backplate (12) thereof and comprises a housing plate (40) connected directly to the base (2) by screws and bolts suitable for the securing thereof in such a way as to ensure long-term operating stability despite the enormous forces acting on it.

17. The combination of brake pad (4) and device (1) according to the preceding claim, **characterised in that** said housing plate (40) has a second template (41) having an edge (42) that exactly reproduces the profile of the backplate or metal plate (12) of the pad (4).

18. The combination of brake pad (4) and device (1) according to one or more of the preceding claims, **characterised in that** said device incorporates a means for measuring the compressibility of said sensor-equipped pad (4).

19. The combination of brake pad (4) and device (1) according to claims 2 and 20, **characterised in that** said compressibility measuring means is incorporated in said first piston (15) providing pressure to the brake pad to be calibrated and consists in a system of measuring the distance between said first piston (15) and the base surface of said brake pad (4).

20. The combination of brake pad (4) and device (1) according to claim 19, **characterised in that** said compressibility measuring means consists in a system of measuring the relative variation in the distance between said first piston (15) and the base surface of said brake pad (4) during compression of said friction material (26).

**Patentansprüche**

1. Kombination aus einem mit Sensoren ausgestatteten Bremsbelag (4) und einem Gerät (1) zur automatischen Kalibrierung des genannten mit Sensoren ausgestatteten Bremsbelags (4), wobei der genannte Bremsbelag ein Reibmaterial (26) und eine Metallplatte oder Trägerplatte (12) umfasst, wobei das Gerät (1) eine feste Stützbasis (2) zur Stabilisierung des Geräts (1) während dessen Betriebs, mindestens ein Bedienfeld (6) zur Steuerung des Geräts (1), ein Haltemittel für den Belag (4), ein mechanisches Belastungsmittel, das auf den Belag (4) eine Normalkraft in Kombination mit einer Scherkraft ausübt und so konfiguriert ist, dass es die typischen Kräfte nachbildet, die während eines realen Bremsvorgangs auf den Belag (4) wirken, sowie Sensoren zur Erfassung der Normalkraft und der Scherkraft umfasst, wobei das Haltemittel ein erstes Verriegelungsmittel (10) zum Fixieren des Reibmaterials mit dem mechanischen Belastungsmittel umfasst, wobei das erste Verriegelungsmittel (10) mindestens eine erste profilierte Kante (32) aufweist, welche die Form des Reibmaterials (26) des Belags (4) nachbildet, um das Reibmaterial während der vom Belastungsmittel ausgeübten Kräfte zu fixieren und eine möglichst gleichmäßige Übertragung der Scherkräfte während der Kalibrierung zu ermöglichen, wobei das Gerät (1) **dadurch gekennzeichnet ist, dass** es ein zweites Verriegelungsmittel (11) umfasst, das den Belag auf der festen Basis (2) fixiert, wobei das zweite Verriegelungsmittel (11) eine zweite profilierte Kante (40) umfasst, welche die Form der Metall- oder Trägerplatte (12) des Belags nachbildet, um diesen während der Belastung durch das Belastungsmittel zu fixieren und eine Scherkraftübertragung bei gleichzeitiger Vermeidung eines Verrutschens des Belags auf der festen Stützbasis (2) zu ermöglichen.

2. Kombination aus Bremsbelag (4) und Gerät (1) gemäß Anspruch 1, **dadurch gekennzeichnet, dass** das Belastungsmittel ein Druckmittel ist, das entweder einen ersten fluiddynamischen Kolben (15) oder einen ersten und einen zweiten fluiddynamischen Kolben (15, 50) umfasst.

3. Kombination aus Bremsbelag (4) und Gerät (1) gemäß Anspruch 2, **dadurch gekennzeichnet, dass** das Gerät (1) mindestens eine Stützsäule (7) umfasst, die mit der Stützbasis (2) verbunden ist und mechanisch den ersten fluiddynamischen Kolben (15) trägt, sowie ein Einstellmittel (9) zur Justierung des ersten fluiddynamischen Kolbens (15), um zusätzlich zur Normalkraft auch eine Scherkraft auf den Belag (4) auszuüben.

4. Kombination aus Bremsbelag (4) und Gerät (1) gemäß einem oder mehreren der vorhergehenden Ansprüche, **dadurch gekennzeichnet, dass** das Gerät (1) einen Hebemechanismus (20) umfasst, um das Belastungsmittel vor und nach der Kalibrierung des Belags (4) anzuheben, damit ein kalibrierter Belag durch einen zu kalibrierenden Belag ersetzt werden kann.

5. Kombination aus Bremsbelag (4) und Gerät (1) gemäß einem oder mehreren der vorhergehenden Ansprüche, **dadurch gekennzeichnet, dass** die Metallplatte (12) Stifte (13a) aufweist, um den elektrischen Kontakt des Belags (4) mit dem Gerät (1) über einen Stecker (13) aufrechtzuerhalten.

6. Kombination aus Bremsbelag (4) und Gerät (1) gemäß dem vorhergehenden Anspruch, **dadurch gekennzeichnet, dass** das Gerät (1) einen Mechanismus zum Zurückziehen der Kontakte des Steckers (13) umfasst, um Beschädigungen zu vermeiden und den elektrischen Kontakt des Belags (4) mit dem Gerät (1) zu erhalten, sowie ein automatisiertes Kontaktierungssystem (101).

7. Kombination aus Bremsbelag (4) und Gerät (1) gemäß Anspruch 3, **dadurch gekennzeichnet, dass** das Einstellmittel (9) den Anstellwinkel des ersten Kolbens (15) durch Verschieben der Stützsäule (7) relativ zur Basis (2) verändert.

8. Kombination aus Bremsbelag (4) und Gerät (1) gemäß Anspruch 7, **dadurch gekennzeichnet, dass** das Gerät (1) einen Verriegelungshebel umfasst, um den Anstellwinkel während des Betriebs des Geräts zu fixieren.

9. Kombination aus Bremsbelag (4) und Gerät (1) gemäß einem oder mehreren der Ansprüche 2 bis 8, **dadurch gekennzeichnet, dass** das Belastungsmittel einen Elektromotor umfasst, der eine Endlosschraube an einem Arm des ersten Kolbens (15) antreibt.

10. Kombination aus Bremsbelag (4) und Gerät (1) gemäß einem oder mehreren der Ansprüche 2 bis 9, **dadurch gekennzeichnet, dass** der erste Kolben (15) so konfiguriert ist, dass er die Normalkraft ausübt, und der zweite Kolben (50) so konfiguriert ist, dass er die Scherkraft ausübt, wobei die beiden Kolben (15 und 50) senkrecht zueinander auf der Basis (2) angeordnet sind.

11. Kombination aus Bremsbelag (4) und Gerät (1) gemäß dem vorhergehenden Anspruch, **dadurch gekennzeichnet, dass** die beiden Kolben (15 und 50) jeweils durch einen ersten und einen zweiten Elektromotor (52 und 53) angetrieben werden.

12. Kombination aus Bremsbelag (4) und Gerät (1) gemäß einem oder mehreren der Ansprüche 10 und 11, **dadurch gekennzeichnet, dass** das Gerät (1) ein erstes Element (56) umfasst, das eine vertikale bzw. horizontale Kraft vom ersten Kolben (15) bzw. vom zweiten Kolben (50) aufnimmt, wobei das erste Element (56) eine flache Klemmfläche auf der freiliegenden Oberfläche des Reibmaterials des Belags (4) aufweist.

13. Kombination aus Bremsbelag (4) und Gerät (1) gemäß den Ansprüchen 5 und 9, **dadurch gekennzeichnet, dass** das Gerät (1) ein zweites Element (57) umfasst, in dem der Belag (4) fixiert ist und in dem die Stifte (13a) untergebracht sind.

14. Kombination aus Bremsbelag (4) und Gerät (1) gemäß einem der Ansprüche 10 bis 13, **dadurch gekennzeichnet, dass** die ersten und zweiten Kolben (15 und 50) in der Nähe der Basis (2) ein erstes und ein zweites Lager (54 und 55) aufweisen.

15. Kombination aus Bremsbelag (4) und Gerät (1) gemäß einem oder mehreren der vorhergehenden Ansprüche, **dadurch gekennzeichnet, dass** das erste Verriegelungsmittel (10) durch eine erste Schablone (31) definiert ist, welche eine Form und eine Kante (32) aufweist, die das Profil des Reibmaterials (26) des Belags (4) präzise nachbildet.

16. Kombination aus Bremsbelag (4) und Gerät (1) gemäß einem oder mehreren der vorhergehenden Ansprüche, **dadurch gekennzeichnet, dass** das zweite Verriegelungsmittel (11) des Belags (4) auf dessen Trägerplatte (12) wirkt und eine Halteplatte (40) umfasst, die direkt mittels Schrauben und Bolzen an der Basis (2) befestigt ist, sodass eine langfristige Betriebsstabilität trotz der enormen wirkenden Kräfte gewährleistet ist.

17. Kombination aus Bremsbelag (4) und Gerät (1) gemäß dem vorhergehenden Anspruch, **dadurch gekennzeichnet, dass** die Halteplatte (40) eine zweite Schablone (41) mit einer Kante (42) aufweist, die das Profil der Trägerplatte oder Metallplatte (12) des Belags (4) exakt nachbildet.

18. Kombination aus Bremsbelag (4) und Gerät (1) gemäß einem oder mehreren der vorhergehenden Ansprüche, **dadurch gekennzeichnet, dass** das Gerät ein Mittel zur Messung der Kompressibilität des mit Sensoren ausgestatteten Belags (4) integriert.

19. Kombination aus Bremsbelag (4) und Gerät (1) gemäß den Ansprüchen 2 und 20, **dadurch gekennzeichnet, dass** das Kompressibilitätsmessmittel im ersten Kolben (15) integriert ist, der den Kalibrierdruck auf den Bremsbelag ausübt, und dass es aus einem System zur Messung des Abstands zwischen dem ersten Kolben (15) und der Grundfläche des Bremsbelags (4) besteht.

20. Kombination aus Bremsbelag (4) und Gerät (1) gemäß Anspruch 19, **dadurch gekennzeichnet, dass** das Kompressibilitätsmessmittel aus einem System besteht, das die relative Veränderung des Abstands zwischen dem ersten Kolben (15) und der Grundfläche des Bremsbelags (4) während der Kompression des Reibmaterials (26) misst.

## Revendications

1. Combinaison d'une plaquette de frein (4) équipée de capteurs et d'un dispositif (1) pour l'étalonnage automatique de ladite plaquette de frein (4) équipée de capteurs, ladite plaquette de frein comprenant un matériau de friction (26) et une plaque métallique ou plaque de support (12), ledit dispositif (1) comprenant une base de support fixe (2) pour stabiliser ledit dispositif (1) pendant son fonctionnement, au moins un panneau de commande (6) pour la gestion dudit dispositif (1), un moyen de retenue pour ladite plaquette (4), un moyen de sollicitation mécanique générant sur ladite plaquette (4) une force normale combinée à une force de cisaillement et configuré de manière à reproduire les forces typiques agissant sur ladite plaquette (4) lors d'un freinage réel d'un véhicule, des capteurs pour détecter ladite force normale et ladite force de cisaillement, ledit moyen de retenue comprenant un premier moyen de verrouillage (10) pour verrouiller le matériau de friction avec ledit moyen de sollicitation mécanique, ledit premier moyen de verrouillage (10) comprenant au moins un premier bord profilé (32), qui reproduit la conformation dudit matériau de friction (26) de ladite plaquette (4) afin de le verrouiller pendant les sollicitations exercées par ledit moyen de sollicitation mécanique, pour permettre la transmission des forces de cisaillement de manière aussi uniforme que possible, ledit dispositif (1) étant **caractérisé en ce qu'**il comprend un second moyen de verrouillage (11) pour fixer ladite plaquette sur ladite base fixe (2), ledit second moyen de verrouillage (11) comprenant un second bord profilé (40) qui reproduit la conformation de ladite plaque métallique ou plaque de support (12) de ladite plaquette afin de la verrouiller pendant les sollicitations exercées par ledit moyen de sollicitation, pour permettre la transmission des forces de cisaillement pendant l'étalonnage tout en évitant le déplacement de ladite plaquette sur ladite base de support fixe (2).

2. Combinaison de la plaquette de frein (4) et du dispositif (1) selon la revendication 1, **caractérisée en ce que** ledit moyen de sollicitation est un moyen de pression, comprenant soit un premier piston fluidodynamique (15), soit un premier et un second pistons fluidodynamiques (15, 50).

3. Combinaison de la plaquette de frein (4) et du dispositif (1) selon la revendication 2, **caractérisée en ce que** ledit dispositif (1) comprend au moins une colonne de support (7) associée à ladite base de support (2) et apte à supporter mécaniquement ledit premier piston fluidodynamique (15), ainsi qu'un moyen de réglage (9) pour ajuster ledit premier piston fluidodynamique (15) afin d'exercer sur la plaquette (4) une force de cisaillement, en plus d'une force normale.

4. Combinaison de la plaquette de frein (4) et du dispositif (1) selon l'une quelconque des revendications précédentes, **caractérisée en ce que** ledit dispositif (1) comprend un mécanisme de levage (20) pour soulever ledit moyen de sollicitation avant et après l'étalonnage de ladite plaquette (4), afin de permettre le retrait d'une plaquette étalonnée et l'installation d'une plaquette à étalonner.

5. Combinaison de la plaquette de frein (4) et du dispositif (1) selon l'une quelconque des revendications précédentes, **caractérisée en ce que** ladite plaque métallique (12) comporte des broches (13a) pour maintenir le contact électrique de ladite plaquette (4) avec ledit dispositif (1) via un connecteur (13).

6. Combinaison de la plaquette de frein (4) et du dispositif (1) selon la revendication précédente, **caractérisée en ce que** ledit dispositif (1) comporte un mécanisme de rétraction des contacts dudit connecteur (13) afin d'éviter leur détérioration et de maintenir le contact électrique de ladite plaquette (4) avec ledit dispositif (1), ainsi qu'un système de contact automatique mécanisé (101).

7. Combinaison de la plaquette de frein (4) et du dispositif (1) selon la revendication 3, **caractérisée en ce que** ledit moyen de réglage (9) modifie l'angle d'incidence dudit premier piston (15) en déplaçant ladite colonne (7) par rapport à ladite base (2).

8. Combinaison de la plaquette de frein (4) et du dispositif (1) selon la revendication 7, **caractérisée en ce que** ledit dispositif (1) comprend un levier de verrouillage pour fixer ledit angle d'incidence pendant le fonctionnement dudit dispositif.

9. Combinaison de la plaquette de frein (4) et du dispositif (1) selon une ou plusieurs des revendications 2 à 8, **caractérisée en ce que** ledit moyen de sollicitation comprend un moteur électrique qui actionne une vis sans fin sur un bras dudit premier piston (15).

10. Combinaison de la plaquette de frein (4) et du dispositif (1) selon une ou plusieurs des revendications 2 à 9, **caractérisée en ce que** ledit premier piston (15) est configuré pour appliquer ladite force normale et ledit second piston (50) est configuré pour appliquer ladite force de cisaillement, lesdits premier et second pistons (15 et 50) étant disposés perpendiculairement l'un par rapport à l'autre sur ladite base (2).

11. Combinaison de la plaquette de frein (4) et du dispositif (1) selon la revendication précédente, **caractérisée en ce que** lesdits premier et second pistons (15 et 50) sont actionnés respectivement par un premier et un second moteur électrique (52 et 53).

12. Combinaison de la plaquette de frein (4) et du dispositif (1) selon une ou plusieurs des revendications 10 et 11, **caractérisée en ce que** ledit dispositif (1) comprend un premier élément (56) destiné à absorber une force verticale et respectivement une force horizontale provenant dudit premier piston (15) et respectivement dudit second piston (50), ledit premier élément (56) présentant une surface de serrage plate sur la surface exposée du matériau de friction de la plaquette (4).

13. Combinaison de la plaquette de frein (4) et du dispositif (1) selon les revendications 5 et 9, **caractérisée en ce que** ledit dispositif (1) comprend un second élément (57) dans lequel ladite plaquette (4) est fixée et dans lequel sont logées lesdites broches (13a).

14. Combinaison de la plaquette de frein (4) et du dispositif (1) selon l'une quelconque des revendications 10 à 13, **caractérisée en ce que** lesdits premier et second pistons (15 et 50) comportent, à proximité de ladite base (2), un premier et un second palier (54 et 55).

15. Combinaison de la plaquette de frein (4) et du dispositif (1) selon une ou plusieurs des revendications précédentes, **caractérisée en ce que** ledit premier moyen de verrouillage (10) est défini par un premier gabarit (31), lequel présente une forme et un bord (32) permettant de reproduire précisément le profil du matériau de friction (26) de la plaquette (4).

16. Combinaison de la plaquette de frein (4) et du dispositif (1) selon une ou plusieurs des revendications précédentes, **caractérisée en ce que** ledit second moyen de verrouillage (11) de la plaquette (4) agit sur la plaque de support (12) de celle-ci et comprend une plaque de logement (40) fixée directement à la base (2) par des vis et des boulons adaptés à son ancrage, de manière à garantir une stabilité de fonctionnement à long terme malgré les forces importantes qui y sont exercées.

17. Combinaison de la plaquette de frein (4) et du dispositif (1) selon la revendication précédente, **caractérisée en ce que** ladite plaque de logement (40) comporte un second gabarit (41) présentant un bord (42) reproduisant exactement le profil de la plaque de support ou plaque métallique (12) de la plaquette (4).

18. Combinaison de la plaquette de frein (4) et du dispositif (1) selon une ou plusieurs des revendications précédentes, **caractérisée en ce que** ledit dispositif incorpore un moyen de mesure de la compressibilité de ladite plaquette (4) équipée de capteurs.

19. Combinaison de la plaquette de frein (4) et du dispositif (1) selon les revendications 2 et 20, **caractérisée en ce que** ledit moyen de mesure de la compressibilité est incorporé dans ledit premier piston (15) fournissant la pression à la plaquette de frein à étalonner et consiste en un système de mesure de la distance entre ledit premier piston (15) et la surface de base de ladite plaquette de frein (4).

20. Combinaison de la plaquette de frein (4) et du dispositif (1) selon la revendication 19, **caractérisée en ce que** ledit moyen de mesure de la compressibilité consiste en un système de mesure de la variation relative de la distance entre ledit premier piston (15) et la surface de base de ladite plaquette de frein (4) pendant la compression dudit matériau de friction (26).

FIG. 1

FIG. 2

FIG. 3

FIG. 4

FIG. 5

FIG. 6

EP 3 622 262 B1

FIG. 6a

26

4 →

12

57

61

62

62

60

13

FIG. 7

71     71

73     72

FIG. 8

71

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7398669 B